# EUROPÄISCHE PATENTSCHRIFT

(11) **EP 2 524 850 B1**
(45) Veröffentlichungstag und Bekanntmachung des Hinweises auf die Patenterteilung: **05.03.2014**
(21) Anmeldenummer: 11004193.6
(22) Anmeldetag: 20.05.2011
(51) Int. Cl.: B61D 17/02, B61D 17/06

(54) **Vorrichtung zum bedarfsweisen Abdichten einer im Stirnbereich eines spurgeführten Fahrzeuges vorgesehenen Öffnung, Bugnasenmodul mit einer derartigen Vorrichtung und spurgeführtes Fahrzeug mit einem derartigen Bugnasenmodul**
Device for sealing an opening in the front area of a rail-bound vehicle as needed, nose cone module with such a device and rail-bound vehicle with such a nose cone module
Dispositif d'étanchéification selon les besoins d'une ouverture prévue dans la partie frontale d'un véhicule sur rail, module à nez frontal doté d'un tel dispositif et véhicule sur rail doté d'un tel module de nez frontal

(43) Veröffentlichungstag der Anmeldung: 21.11.2012
(73) Patentinhaber: Voith Patent GmbH, 89522 Heidenheim (DE)
(72) Erfinder: Radewagen, Christian, 38228 Salzgitter (DE)
(74) Vertreter: Trinks, Ole

(56) Entgegenhaltungen:
- EP-A1- 2 208 655
- EP-A2- 0 826 570
- WO-A1-2007/073273
- DE-A1- 4 300 393
- DE-A1- 4 305 892
- FR-A- 857 108
- FR-A1- 2 934 550
- NL-A- 8 900 633

## Beschreibung

Die Erfindung betrifft eine Vorrichtung gemäß dem Oberbegriff des unabhängigen Patentanspruches 1. Demgemäß betrifft die Erfindung insbesondere eine Vorrichtung zum bedarfsweisen Abdichten einer im Stirnbereich eines spurgeführten Fahrzeuges vorgesehenen Öffnung, durch welche sich im gekuppelten oder kuppelbereiten Zustand des Fahrzeuges der Kupplungsschaft einer mit dem Fahrzeug verbundenen Mittelpufferkupplung erstreckt, wobei die Vorrichtung einen Dichtkörper mit variabler Größe und einen Rahmen zum Tragen des Dichtkörpers aufweist, wobei der Rahmen zusammen mit dem daran befestigten Dichtkörper einen Bereich umgeben, durch den der Kupplungsschaft der Mittelpufferkupplung führbar ist, und wobei der Dichtkörper derart ansteuerbar ist, dass die Größe der von dem Dichtkörper abgedeckten Fläche einstellbar ist. Die Erfindung betrifft ferner ein Bugnasenmodul für ein spurgeführtes Fahrzeug, insbesondere Schienenfahrzeug, mit einer Rahmenanordnung zum Befestigen des Bugnasenmoduls an der Stirnseite des Fahrzeuges, wobei das Bugnasenmodul eine fahrzeugstirnseitige Öffnung aufweist, durch welche sich im gekuppelten oder kuppelbereiten Zustand des Fahrzeuges der Kupplungsschaft einer an der Stirnseite des Fahrzeugs befestigten Mittelpufferkupplung erstreckt, und wobei das Bugnasenmodul ferner eine Vorrichtung der zuvor genannten Art aufweist zum bedarfsweisen Abdichten der im Bugnasenmodul vorgesehenen fahrzeugseitigen Öffnung. Schließlich betrifft die vorliegende Erfindung noch ein spurgeführtes Fahrzeug, insbesondere Schienenfahrzeug, mit einem an einer Fahrzeugstirnseite angeordneten Bugnasenmodul der zuvor genannten Art sowie mit einer an der einen Fahrzeugstirnseite befestigten Mittelpufferkupplung.

Eine derartige Vorrichtung zum bedarfsweisen Abdichten einer im Stirnbereich eines spurgeführten Fahrzeuges vorgesehenen Öffnung ist zumindest dem Prinzip nach aus der Druckschrift FR 2 934 550 A bekannt.

Andererseits ist aus der Druckschrift EP 2 208 655 A eine Klappenanordnung für ein Schienenfahrzeug bekannt, wobei die Klappenanordnung bewegliche Elemente aufweist, die in einem geschlossenen Zustand einen Teil der Außenoberfläche am Bug oder Heck des Schienenfahrzeugs bilden und eine im Bug oder Heck des Schienenfahrzeugs angeordnete Kupplungsvorrichtung abdecken und die in einem geöffneten Zustand einen Gebrauch der Kupplungsvorrichtung ermöglichen. Die Klappenanordnung weist drei der beweglichen Elemente auf, wobei ein erstes der beweglichen Elemente in dem geschlossenen Zustand eine ungefähr horizontal verlaufende Grenzlinie zu dem zweiten und dritten beweglichen Element aufweist und wobei das zweite und dritte bewegliche Element in dem geschlossenen Zustand eine ungefähr vertikal verlaufende Grenzlinie zueinander aufweisen.

Schließlich ist aus der Druckschrift WO 2007/073273 A eine Frontluke mit freitragendem Lukenbetätigungsmechanismus bekannt.

Demnach ist es aus der Schienenfahrzeugtechnik bekannt, die Stirnseite eines spurgeführten Fahrzeuges mit einer Schutzverkleidung zu versehen, um eine an der Fahrzeugstirnseite vorgesehene Mittelpufferkupplung, und insbesondere den Kupplungskopf der Kupplung, vor Witterungseinflüssen wie Schnee, Vereisung, Feuchtigkeit und Schmutz schützen zu können, wenn die Kupplung nicht zum Einsatz kommt oder ggf. in einen hinter der Schutzverkleidung ausgebildeten Kupplungsraum zurückgezogen bzw. zurückgeschwenkt ist, Hierbei bezeichnet der Begriff "Kupplungsraum" den von der stirnseitigen Schutzverkleidung umschließbaren Bauraum hinter der Bugspitze.

Häufig ist ein Teil der Schutzverkleidung als Bugklappe ausgeführt, die mit Hilfe einer Bugklappen-Kinematik verschwenkt werden kann, um in Richtung Stirnseite des spurgeführten Fahrzeuges den Kupplungsraum zu öffnen, so dass die Mittelpufferkupplung in die Kupplungsebene hinaus gefahren bzw. eingeschwenkt werden kann. Bei starr montierten, d.h. nicht ausfahrbar bzw. ausschwenkbar ausgeführten Kupplungen ist der als Bugklappe ausgeführte Teil der Schutzverkleidung soweit zu verschwenken, dass sie nicht mehr in der Kupplungsebene vorliegt und die Kupplung in ihrem kuppelbereiten Zustand vorliegt.

In dem Kupplungsraum sind in der Regel die wesentlichen Bauteile der Bugklappen-Kinematik untergebracht, so dass im geschlossen Zustand des Kupplungsraumes, d.h. wenn die stirnseitige Öffnung des Kupplungsraumes mit dem als Bugklappe ausgeführten Teil der Schutzverkleidung verdeckt ist, sind nicht nur die Bauteile der Bugklappen-Kinematik, sondern auch die Mittelpufferkupplung, und insbesondere der Kupplungskopf der Kupplung, vor Witterungseinflüssen geschützt.

Zur Realisierung der stirnseitigen Schutzverkleidung kommen häufig sogenannte Bugnasenmodule zum Einsatz. Ein solches Bugnasenmodul ist eine modulare Baueinheit, welche als solche an einer an der Fahrzeugstirnseite vorgesehenen Schnittstelle montiert werden kann. Ein Bugnasenmodul weist in der Regel mindestens eine Bugklappe auf, welche relativ zu der Fahrzeugstirnseite bzw. dem Fahrzeuguntergestell verschwenkbar ist, um bei Bedarf eine im Bugnasenmodul ausgebildete stirnseitige Öffnung und somit den Kupplungsraum freizulegen.

Die Mittelpufferkupplung selber ist üblicherweise über einen Lagerbock ebenfalls mit der Fahrzeugstirnseite bzw. dem Fahrzeuguntergestell verbunden. Ein Verschwenken der Bugklappe relativ zu der Fahrzeugstirnseite bzw. dem Fahrzeuguntergestell legt somit zumindest den vorderen Teil der Mittelpufferkupplung frei. Dies gilt sowohl für starr montierten, d.h. nicht ausfahrbar bzw. ausschwenkbar ausgeführten Kupplungen, als auch für Fälle, bei denen die Mittelpufferkupplung von ihrem zurückgezogenen und in dem Kupplungsraum aufgenommenen Zustand in den ausgefahrenen bzw. ausgeschwenkten und kuppelbereiten Zustand überführt werden muss.

Unter dem hierin verwendeten Begriff "Bugklappe" wird der Teil der frontseitigen Schutzverkleidung verstanden, der in seinem geschlossenen Zustand die im Stirnbereich des Fahrzeuges vorgesehene Öffnung frontseitig abdeckt, damit die in dem Kupplungsraum aufgenommenen Bauteile vor Witterungseinflüssen geschützt werden können. Im geschlossenen Zustand der Bugklappe weist die Stirnseite des Fahrzeuges ferner eine aerodynamisch vorteilhafte Frontpartie auf, was sich insbesondere bei stromlinienförmigen Triebzügen, wie Hochgeschwindigkeitszügen, auszeichnet.

Wie bereits angedeutet kommt zum Verschwenken der Bugklappe relativ zu dem Fahrzeuguntergestell In der Regel eine Bugklappen-Kinematik zum Einsatz, welche mindestens ein Betätigungselement aufweist und ausgelegt ist, bei Bedarf die im Stirnbereich des Fahrzeuges vorgesehene Öffnung und somit den Kupplungsraum freizulegen. Wie bereits angedeutet, ist dies insbesondere dann erforderlich, wenn das Fahrzeug in einen kuppelbereiten Zustand überführt werden soll, oder wenn, beispielsweise aus Wartungsgründen, ein Zugang zu dem Kupplungsraum und den darin aufgenommenen Kupplungsbauteilen ermöglicht werden soll.

Auch wenn mit den bekannten Lösungen die an der Stirnseite des Schienenfahrzeuges angeordneten Bauteile, insbesondere Kupplungsbauteile, vor Witterungseinflüssen geschützt werden können, wenn der Kupplungsraum von der Bugklappe abgedeckt ist, lässt es sich bislang nicht verhindern, dass die in dem Kupplungsraum enthaltenen Komponenten der Witterung ausgesetzt und unter Umständen in Mitleidenschaft gezogen werden, wenn sich das Fahrzeug mit geöffneter Bugklappe fortbewegt. Dies ist beispielsweise dann der Fall, wenn sich die Bugklappe aufgrund beispielsweise einer technischen Störung der Bugklappen-Kinematik nicht schließen lässt, oder wenn an der Stirnseite des Schienenfahrzeuges ein weiteres Schienenfahrzeug gekuppelt ist.

Aufgrund dieser Problemstellung liegt der Erfindung die Aufgabe zugrunde, eine Lösung anzugeben, mit welcher auch bei geöffneter Bugklappe bzw. ohne Bugklappe ein sicherer Schutz der in dem Kupplungsraum vorhandenen Bauteile sichergestellt werden kann.

Diese Aufgabe wird erfindungsgemäß durch den Gegenstand des unabhängigen Patentanspruches 1 gelöst,

Demgemäß wird eine Vorrichtung vorgeschlagen, welche ausgebildet ist zum bedarfsweisen Abdichten einer im Stirnbereich eines spurgeführten Fahrzeuges vorgesehenen Öffnung, durch welche sich im gekuppelten oder kuppelbereiten Zustand des Fahrzeuges der Kupplungsschaft einer mit dem Fahrzeug verbundenen Mittelpufferkupplung erstreckt. Erfindungsgemäß weist die Vorrichtung einen Dichtkörper mit variabler Größe und einen Rahmen zum Tragen des Dichtkörpers auf. Der Rahmen zusammen mit dem daran befestigten Dichtkörper umgeben einen Bereich, durch den der Kupplungsschaft der Mittelpufferkupplung führbar ist. Um die im Stirnbereich des spurgeführten Fahrzeuges vorgesehene Öffnung bedarfsweise abdichten zu können, ist der Dichtkörper derart ansteuerbar ausgeführt, dass die Größe der von dem Dichtkörper abgedeckten Fläche einstellbar ist.

Vorteilhafte Weiterbildungen hinsichtlich der erfindungsgemäßen Vorrichtung zum bedarfsweisen Abdichten einer im Stirnbereich eines spurgeführten Fahrzeuges vorgesehenen Öffnung sind in den Ansprüchen 2 bis 5 angegeben.

Die der Erfindung zu Grunde liegende Aufgabe wird ferner durch ein Bugnasenmodul gemäß dem Patentanspruch 6 gelöst.

Das erfindungsgemäße Bugnasenmodul, welches den Stirnbereich eines spurgeführten Fahrzeuges ausbildet, weist eine Rahmenanordnung auf zum Befestigen des Bugnasenmoduls an der Stirnseite des Fahrzeuges. Ferner ist das Bugnasenmodul mit einer fahrzeugstirnseitigen Öffnung versehen, durch welche sich im gekuppelten oder kuppelbereiten Zustand des Fahrzeuges der Kupplungsschaft einer an der Stirnseite des Fahrzeuges befestigten Mittelpufferkupplung erstreckt. Um die fahrzeugstirnseitige Öffnung des Bugnasenmoduls bedarfsweise abdichten zu können, ist ferner eine Vorrichtung nach einem der Ansprüche 1 bis 5 vorgesehen.

Vorteilhafte Weiterbildungen hinsichtlich des erfindungsgemäßen Bugnasenmoduls sind in den Ansprüchen 7 und 8 angegeben.

Schließlich wird die der Erfindung zugrundeliegende Aufgabe noch durch ein spurgeführtes Fahrzeug, insbesondere Schienenfahrzeug gelöst, welches ein an einer Fahrzeugstirnseite angeordnetes Bugnasenmodul nach einem der Ansprüche 6 bis 8 und eine an der einen Fahrzeugstirnseite befestigte Mittelpufferkupplung aufweist.

Vorteilhafte Weiterbildungen hinsichtlich des erfindungsgemäßen Fahrzeuges sind in den Ansprüchen 10 bis 12 angegeben.

Die mit der erfindungsgemäßen Lösung erzielbaren Vorteile liegen auf der Hand: durch das Vorsehen der erfindungsgemäßen Vorrichtung, welche einen Dichtkörper mit variabler Größe aufweist, ist sichergestellt, dass auch bei extremen Bedingungen, wie etwa Winterbedingungen, kein Schnee, Feuchtigkeit oder andere Fremdkörper in den Kupplungsraum eindringen können, selbst wenn das Fahrzeug mit geöffneter Bugklappe fährt. Der Dichtkörper ist dabei derart ausgebildet, dass er radial expandierbar ist, wobei im expandierten Zustand des Dichtkörpers der Kupplungsraum abgeschlossen wird. Durch den Dichtkörper läuft die Mittelpufferkupplung bzw. der Kupplungsschaft der Mittelpufferkupplung, so dass auch im expandierten Zustand des Dichtkörpers eine kuppelbereite bzw. gekuppelte Stellung der Mittelpufferkupplung realisierbar ist, Vorzugsweise ist der von dem Dichtkörper umgebene Bereich, durch den sich der Kupplungsschaft der Mittelpufferkupplung erstreckt, derart ausgebildet, dass selbst im expandierten Zustand des Dichtkörpers die Verschwenkbarkeit des Kupplungsschaftes relativ zum Wagenkasten bzw, Fahrzeuguntergestell in sowohl horizontaler als auch vertikaler Richtung nicht eingeschränkt ist, um nach wie vor eine Kurvenfahrt bzw. das Überfahren von Anhöhe oder das Durchfahren von Senken zu ermöglichen.

Der Dichtkörper wird von einem Rahmen bzw. einer Rahmenkonstruktion getragen. Dieser Rahmen bildet die (einzige) Installationsschnittstelle, mit welcher der Dichtkörper entweder am stirnseitigen Bereich des Fahrzeuges oder an der Kupplung montiert wird. Dies erlaubt eine einfach zu realisierende Montage der erfindungsgemäßen Vorrichtung, insbesondere ohne dass die Konstruktion des stirnseitigen Bereiches des Wagenkastens bzw. die Konstruktion des Bugnasenmoduls verändert werden müsste.

Die Größe der von dem Dichtkörper abgedeckten Fläche ist durch eine geeignete Ansteuerung des Dichtkörpers einstellbar. Auf diese Weise kann der Dichtkörper von seinem expandierten Zustand in seinen reduzierten Zustand überführt werden, was beispielsweise dann erforderlich ist, wenn die Bugklappe geöffnet oder geschlossen werden muss bzw. wenn-etwa aus Wartungsgründen-Zugang zu dem Kupplungsraum erforderlich ist.

In einer bevorzugten Realisierung der erfindungsgemäßen Lösung weist der Dichtkörper mindestens eine aufblähbar Hohlkammer auf, welche derart ausgebildet und pneumatisch oder hydraulisch ansteuerbar Ist, dass beim Aufblähen der mindestens einen Hohlkammer die von dem Dichtkörper abgedeckte Fläche vergrößert wird. Denkbar hierbei ist es beispielsweise, den Dichtkörper als aufblasbare Dichtung beispielsweise in Gestalt einer balgartig ausgeführten Blähklemme oder Blähmanschette auszuführen.

Alternativ hierzu ist es auch denkbar, einen mechanisch betätigbaren Dichtkörper einzusetzen. Beispielsweise eignet sich ein rosettenartig aufgebauter Dichtkörper, welche eine Vielzahl von jeweils auf einer Achse gelagerte Lammellen aufweist, die über eine Mechanik gemeinsam in Richtung des von dem Rahmen umgebenen Bereiches drehbar sind, um auf diese Weise die von dem Dichtkörper abgedeckte Fläche zu vergrößern bzw. zu verändern.

In bevorzugter Weise allerdings kommt als Dichtkörper ein aufblasbarer und vorzugsweise wulstartig ausgeführter Balg zum Einsatz, welcher ausgebildet ist, beim Aufblasen in Radialrichtung zu expandieren. Im expandierten Zustand des Dichtkörpers drückt dieser auf den Randbereich der fahrzeugstirnseitigen. Öffnung und dichtet diese entsprechend ab.

Nachfolgend werden unter Bezugnahme auf die beiliegenden Zeichnungen bevorzugte Ausführungsformen der erfindungsgemäßen Lösung beschrieben.

Es zeigen:
- Fig. 1: eine perspektivische Ansicht auf ein Bugnasenmodul mit einer Vorrichtung zum bedarfsweisen Abdichten der fahrzeugstirnseitigen Öffnung des Bugnasenmoduls gemäß einer Ausführungsform der Erfindung, wobei der Dichtkörper der Abdichtvorrichtung in seinem nicht expandierten Zustand vorliegt;
- Fig. 2: eine perspektivische Ansicht des Bugnasenmoduls gemäß Fig. 1 in einem Zustand, in welchem der Dichtkörper in seinem expandierten Zustand vorliegt;
- Fig. 3: eine tellgeschnittene Ansicht des Bugnasenmoduls gemäß Fig. 2;
- Fig. 4a: eine schematische Draufsicht auf eine Ausführungsform der erfindungsgemäßen Vorrichtung mit nicht expandiertem Dichtkörper;
- Flg. 4b: eine schematische Draufsicht auf die Vorrichtung gemäß Fig. 4a mit expandiertem Dichtkörper;
- Fig. 5a: eine schematische Draufsicht auf eine weitere Ausführungsform der erfindungsgemäßen Vorrichtung mit nicht expandiertem Dichtkörper; und
- Fig. 5b: eine schematische Draufsicht auf die Vorrichtung gemäß Fig. 5a mit expandiertem Dichtkörper.

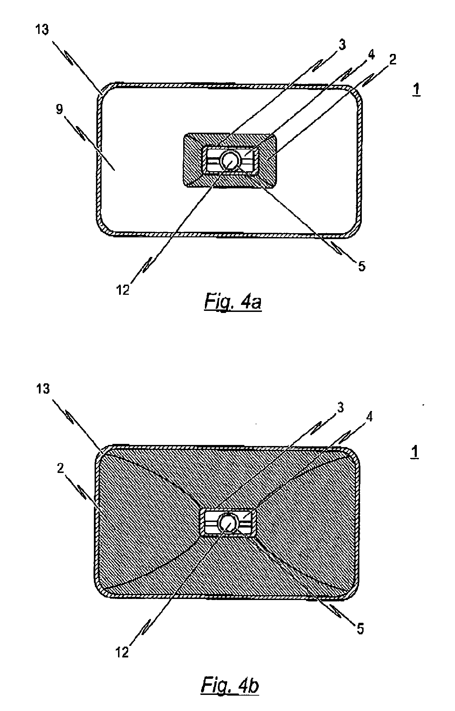

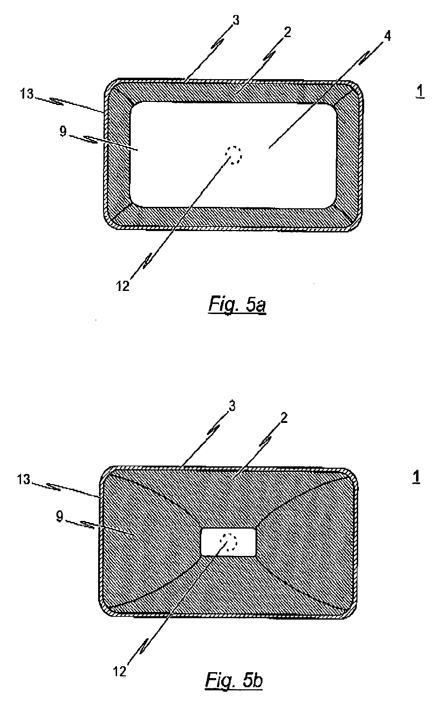

Nachfolgend wird zunächst unter Bezugnahme auf die Figuren 4a, b und 5a, b das Prinzip der erfindungsgemäßen Vorrichtung 1 beschrieben. Im Einzelnen ist in den Figuren 4a und b eine Ausführungsform der erfindungsgemäßen Lösung gezeigt, bei welcher ein Dichtkörper 2 zum Einsatz kommt, welcher von einem Rahmen 3 getragen wird, wobei der Dichtkörper 2 radial nach außen expandierbar ist, um bei Bedarf eine im Stirnbereich eines spurgeführten Fahrzeuges vorgesehene Öffnung abzudichten.

Im Unterschied hierzu ist in den Figuren 5a und b eine Ausführungsform der erfindungsgemäßen Lösung dargestellt, bei welcher der Dichtkörper 2 radial nach Innen expandierbar ist.

Beide Ausführungsformen haben gemeinsam, dass der Dichtkörper 2, welcher beispielsweise in Gestalt eines aufblähbaren Balgs aus robustem und flexiblem Material realisiert ist, bei Bedarf seine Größe verändern kann. Der Dichtkörper 2 ist dabei vorzugsweise pneumatisch oder hydraulisch derart ansteuerbar ausgeführt, dass die Größe der von dem Dichtkörper 2 abgedeckten Fläche einstellbar ist. Im Einzelnen ist in den Figuren 4a und 5a jeweils der Dichtkörper 2 in seinem nicht expandierten Zustand dargestellt, Im Gegensatz hierzu ist in den Figuren 4b und 5b der Dichtkörper 2 in einem Zustand dargestellt, in weichem er expandiert ist, so dass die Größe der von dem Dichtkörper 2 abgedeckten Fläche entsprechend vergrößert wird.

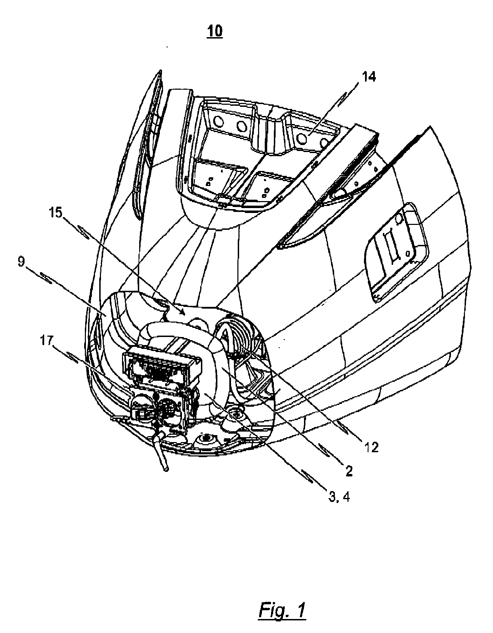

Bei beiden Ausführungsformen wird der Dichtkörper 2 von einem Rahmen 3 getragen. Dieser Rahmen 3 übernimmt eine Stützfunktion und dient gleichzeitig als einzige Schnittstelle, über die der Dichtkörper 2 entweder mit der Bugnase eines spurgeführten Fahrzeuges oder mit einer am Fahrzeuguntergestell eines spurgeführten Fahrzeuges angelenkten Mittelpufferkupplung verbunden wird, damit der Dichtkörper 2 mit festem Sitz eingebaut werden kann. Die in den Figuren 4a und 4b dargestellte Ausführungsform ist zur Montage an einer Mittelpufferkupplung bzw. dem Kupplungsschaft einer Mittelpufferkupplung aufgeführt, wie es nachfolgend näher unter Bezugnahme auf das in den Figuren 1 bis 3 dargestellte Ausführungsbeispiel beschrieben wird.

Wie es der schematischen Darstellung in den Figuren 4a und 4b entnehmbar ist, umgeben bei dieser Ausführungsform der Rahmen 3 zusammen mit dem daran befestigten Dichtkörper 2 einen Bereich 4, durch den der Kupplungsschaft 12 einer Mittelpufferkupplung führbar ist. Hierbei ist der Dichtkörper 2 an dem Außenumfang des Rahmens 3 angebracht, so dass der Dichtkörper 2 radial nach außen expandierbar ist. Der Rahmen 3 ist derart ausgeführt, dass der Dichtkörper 2 von einer in dem Bereich 4 vorzugsweise zentral vorgesehenen Öffnung 5 radial beabstandet ist, damit der Dichtkörper 2 im expandierten Zustand (vgl. Fig. 4b) weit genug von dem Kupplungskopf der Mittelpufferkupplung entfernt ist, um die Funktionsfähigkeit des Kupplungskopfes nicht zu beeinträchtigen. Durch die bereits erwähnte Öffnung 5 wird der Kupplungsschaft 11 der Mittelpufferkupplung geführt.

Die in den Figuren 5a und 5b dargestellte Ausführungsform hingegen ist nicht zur Montage an dem Kupplungsschaft 11 einer Mittelpufferkupplung, sondern zur Montage vorzugsweise am Randbereich 13 einer im Fahrzeugbug stirnseitig vorgesehenen Öffnung 9 ausgeführt. Zu diesem Zweck ist der Dichtkörper 2 innerhalb des von dem Rahmen 3 umgebenen Bereiches 4 angeordnet, so dass der Dichtkörper 2 radial nach innen in den Bereich 4 expandieren kann.

Bei beiden Ausführungsformen ist der Rahmen 3 bzw. der Dichtkörper 2 derart ausgebildet, dass die Bewegung der Kupplung innerhalb des von dem Rahmen 3 zusammen mit dem daran befestigten Dichtkörper 2 umgebenen Bereiches 4 sichergestellt Ist.

Nachfolgend wird unter Bezugnahme auf die Darstellungen in den Figuren 1 bis 3 eine bevorzugte Ausführungsform der erfindungsgemäßen Lösung näher beschrieben. Im Einzelnen ist in Fig. 1 in einer perspektivischen Ansicht ein Bugnasenmodul 10 gezeigt, wobei dieses Bugnasenmodul 10 mit einer Ausführungsform der erfindungsgemäßem Vorrichtung 1 zum bedarfsweisen Abdichten einer im Bugnasenmodul 10 vorgesehenen fahrzeugseitigen Öffnung 9 ausgerüstet ist.

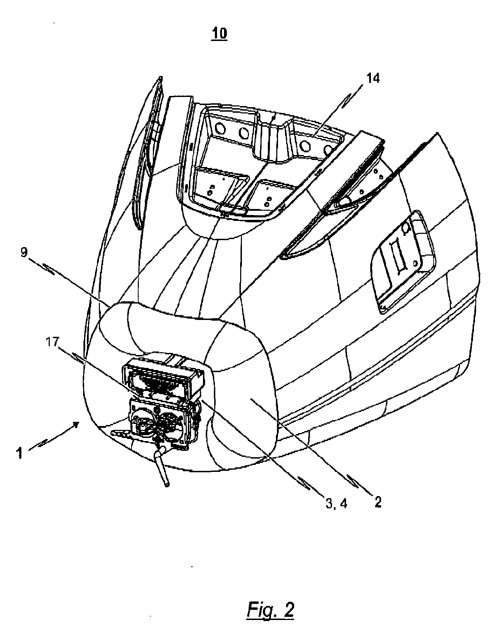

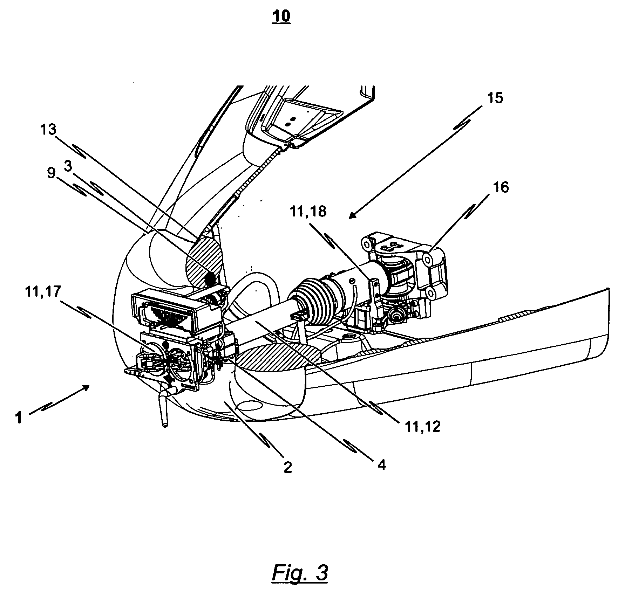

Fig. 2 ist eine perspektivische Ansicht auf das Bugnasenmodul 10 gemäß Fig. 1, wobei allerdings der Dichtkörper 2 der erfindungsgemäßen Vorrichtung 1 diesmal in einem expandierten Zustand vorliegt, in welchem der Dichtkörper 2 auf den Randbereich der in dem Bugnasenmodul vorgesehenen fahrzeugseitigen Öffnung 9 drückt und somit eine entsprechende Abdichtung gewährleistet. Fig. 3 ist eine teilgeschnittene Darstellung des Bugnasenmoduls 10 gemäß Fig. 2.

Bei dem in den Figuren 1 bis 3 dargestellten Bugnasenmodul 10 handelt es sich um die stirnseitige Verkleidung eines Fahrzeuges, wobei diese stirnseitige Verkleidung über eine Schnittstelle (hier Rahmenkonstruktion 14) mit der Stirnseite bzw, dem Untergestell eines Fahrzeuges, insbesondere eines Triebfahrzeuges, verbunden werden kann. Das Bugnasenmodul 10 ist vorzugsweise eine modulare Baueinheit, welche als solche an einer an der Fahrzeugstirnseite vorgesehene Schnittstelle montiert werden kann.

Obwohl in den Zeichnungen nicht darstellt, kann das Bugnasenmodul 10 eine Bugklappe aufweisen, welche relativ zu dem Bugnasenmodul 10 verschwenkbar ist, um bei Bedarf die im Bugnasenmodul 10 stirnseitig ausgebildete Öffnung 9 und somit den hinter der Bugspitze von den Bugnasenmodul 10 umschlossenen Bauraum (Kupplungsraum 15) freizulegen. Aus Gründen der Übersichtlichkeit Ist bei dem in den Figuren 1 bis 3 dargestellten Bugnasenmodul 10 auf die Darstellung einer solchen Bugklappe verzichtet worden.

Wie es der teilgeschnittenen Ansicht gemäß Fig. 3 entnommen werden kann, ist in dem von dem Bugnasenmodul 10 gebildeten Kupplungsraum 9 zumindest teilweise eine mittelpufferkupplung 11 aufgenommen. Die Mittelpufferkupplung 11 ist über einen Lagerbock 16 in horizontaler und vertikaler Richtung verschwenkbar an einer nicht dargestellten Fahrzeugstirnseite bzw. an einem ebenfalls nicht dargestellten Fahrzeuguntergestell angelenkt.

Die Mittelpufferkupplung 11 weist einen Kupplungsschaft 12 sowie einen am stirnseitigen Endbereich des Kupplungsschaftes 12 angeordneten Kupplungskopf 17 auf. In dem Kupplungsschaft 12 kann ein Energieverzehrelement 18 integriert sein, um die im Fahrbetrieb auftretenden und über die Mittelpufferkupplung 11 in das Fahrzeuguntergestell eingeleiteten Zug- und Stoßkräfte vorzugsweise regenerativ abzudämpfen. Derartige Energieverzehrelemente sind aus dem Stand der Technik bekannt und werden hierin nicht näher beschrieben.

In dem von den Bugnasenmodul 10 bebildeten Kupplungsraum 15 befinden sich nicht nur Teile der Mittelpufferkupplung 11, sondern auch die wesentlichen Bauteile einer Bugklappen-Kinematik, welche zum Verschwenken der In den Zeichnungen nicht dargestellten Bugklappe relativ zu den Bugnasenmodul 10 verwendet wird.

Damit im Fahrbetrieb die stirnseitige Öffnung 9 des Bugnasenmoduls 10 abgedichtet werden kann, und zwar auch dann, wenn eine Bugklappe in ihrem geöffneten Zustand vorliegt, ist das Bugnasenmodul 10 gemäß der in den Figuren 1 bis 3 dargestellten Ausführungsform mit einer Vorrichtung 1 zum bedarfsweisen Abdichten der im Stirnbereich des Bugnasenmoduls 10 vorgesehenen Öffnung 9 ausgerüstet. Die erfindungsgemäße Vorrichtung 1 ist insbesondere als semipermanenter Schneeschutz ausgeführt und soll insbesondere bei extremen Witterungsverhältnissen zum Einsatz kommen, wenn ein Eindringen von Schnee oder Feuchtigkeit in den von dem Bugnasenmodul 10 gebildeten Kupplungsraum 15 wirksam verhindert werden soll, da derartige Witterungseinflüsse die in dem Kupplungsraum 15 aufgenommenen Bauteile, beispielsweise Komponenten der Bugklappen-Kinematik bzw. Komponenten der Mittelpufferkupplung 11, in Mitleidenschaft ziehen könnten.

Die Vorrichtung 1 zum bedarfsweisen Abdichten der Öffnung 9 weist einen Rahmen 3 auf, über welchen ein Dichtkörper 2 getragen wird. Der Rahmen 3 dient als einzige Montageschnittstelle der Vorrichtung 1 und ist bei der in den Figuren 1 bis 3 dargestellten Ausführungsform mit der Mittelpufferkupplung 11, und im Einzelnen mit dem Kupplungsschaft 12 der Mittelpufferkupplung 11 fest verbunden. Der Rahmen 3 zusammen mit dem von dem Rahmen 3 getragenen Dichtkörper 2 umgeben einen Bereich 4, durch den der Kupplungsschaft 12 der Mittelpufferkupplung 11 geführt wird, Dieser Bereich 4 ist derart gewählt, dass der Dichtkörper 2 hinreichend weit in radialer Richtung von dem Kupplungsschaft 12 beabstandet ist, damit der Dichtkörper 2 im expandierten Zustand (vgl. Figuren 2 und 3) nicht die Komponenten des Kupplungskopfes 17 berührt, wobei insbesondere noch die Verschwenkbarkeit der Mittelpufferkupplung 11 relativ zum Fahrzeuguntergestell und relativ zum Bugnasenmodul 10 gewährleistet ist.

Im Einzelnen, und wie es insbesondere auch der tellgeschnittenen Darstellung in Fig. 3 entnommen werden kann, ist bei der dort dargestellten Ausführungsform des erfindungsgemäßen Bugnasenmoduls 10 der Kupplungsschaft 12 der Mittelpufferkupplung 11 durch den von dem Rahmen 3 und dem daran befestigten Dichtkörper 2 umgebenen Bereich 4 geführt, wobei der Rahmen 3 vorzugsweise lösbar an den Kupplungsschaft 12 der Mittelpufferkupplung 11 befestigt ist, und wobei der Dichtkörper 2 derart expandierbar ausgebildet ist, dass im expandierten Zustand des Dichtkörpers 2 dieser vorzugsweise radial auf einen Randbereich 13 der im Stirnbereich des Fahrzeugs bzw, im Stirnbereich des Bugnasenmoduls 10 vorgesehenen Öffnung 9 drückt.

Der in den Figuren 1 bis 3 zum Einsatz kommende Dichtkörper 2 weist; mindestens eine aufblähbare Hohlkammer auf, welche derart ausgebildet und pneumatisch oder hydraulisch ansteuerbar ist, dass beim Aufblähen der mindestens einen Hohlkammer die von dem Dichtkörper 2 abgedeckte Fläche vergrößert wird. Insbesondere ist der Dichtkörper 2 als aufblasbarer und wulstartig ausgeführter Balg ausgeführt, der beim Aufblasen in Radialrichtung expandiert, wie es unmittelbar aus einer Zusammenschau der Figuren 1 und 2 hervorgeht.

Bei der in den Figuren 1 bis 3 dargestellten Ausführungsform kommt eine starre montierte Mittelpufferkupplung 11 zum Einsatz. Denkbar wäre es selbstverständlich aber auch, die Mittelpufferkupplung 11 ein- und ausfahrbar oder ein- und ausklappbar auszubilden.

Die erfindungsgemäße Lösung eignet sich Insbesondere als ein semi-permanenter Schneeschutz für Mittelpufferkupplungen. Wie bereits dargelegt, besteht die erfindungsgemäße Vorrichtung aus einem Träger 3 sowie einem Dichtkörper 2 bzw. Balg aus robustem, flexiblem Material. Der Träger 3 kann an der Mittelpufferkupplung 11 bzw. an dem Kupplungsschaft 12 der Mittelpufferkupplung 11 oder am Fahrzeugbug und insbesondere am Randbereich 13 einer stirnseitig im Fahrzeugbug vorgesehenen Öffnung 9 montiert werden.

Der Dichtkörper 2 ist, wenn die Abdichtung der Öffnung 9 nicht benötigt wird, beispielsweise über mechanische Systeme oder Druckluft, zusammengefaltet und schmiegt sich mit geringer Ausdehnung an den Träger 3 an (vgl. hierzu insbesondere die Darstellung in Fig. 1).

Wird hingegen eine Abdichtung der Öffnung 9 erwünscht, so dann über Druckluft oder mechanisches System der Dichtkörper 2 soweit expandieren, dass der Dichtkörper 2 den Bereich zwischen der Kupplung 11 und dem Randbereich 13 abdeckt. Auch in diesem Zustand wird die Bewegung der Mittelpufferkupplung 11 relativ zu dem Fahrzeuguntergestell sowie relativ zu dem Bugnasenmodul 10 innerhalb des Trägers 3 bzw. des Dichtkörpers 2 sichergestellt.

Ein Vorteil dieser Anordnung ist insbesondere auch darin zu sehen, dass die erfindungsgemäße Vorrichtung 1 lediglich eine Montageschnittstelle benötigt, entweder an der Mittelpufferkupplung 11 oder am Fahrzeugbug. Somit lassen sich auch Fahrzeuge nachträglich nachrüsten.

Im nicht expandierten Zustand des Dichtkörpers 2 behindert dieser nicht das Öffnen bzw. Schließen einer Bugklappe.

Die Erfindung ist nicht auf die in den Zeichnungen dargestellten Ausführungsbeispiele beschränkt, sondern ergibt sich aus einer Zusammenschau sämtlicher hierin offenbarter Merkmale.

### Bezugszeichenlisten

- 1: Vorrichtung zum bedarfsweisen Abdichten
- 2: Dichtkörper
- 3: Rahmen
- 4: vom Rahmen umgebener Bereich
- 5: Öffnung für Kupplungsschaft
- 9: stirnseitige Öffnung des Kupplungsraumes
- 10: Bugnasenmodul
- 11: Mittelpufferkupplung
- 12: Kupplungsschaft
- 13: Randbereich der stirnseitigen Öffnung des Kupplungsraumes
- 14: Rahmenkonstruktion des Bugnasenmoduls 10
- 15: Kupplungsraum
- 16: Lagerbock
- 17: Kupplungskopf
- 18: Energieverzehrelement

## Patentansprüche

1. Vorrichtung (1) zum bedarfsweisen Abdichten einer im Stirnbereich eines spurgeführten Fahrzeuges vorgesehenen Öffnung (9), durch welche sich im gekuppelten oder kuppelbereiten Zustand des Fahrzeuges der Kupplungsschaft (12) einer mit dem Fahrzeug verbundenen Mittelpufferkupplung (11) erstreckt, wobei die Vorrichtung (1) folgendes aufweist:
- einen Dichtkörper (2) mit variabler Größe; und
- einen Rahmen (3) zum Tragen des Dichtkörpers (2),
wobei der Rahmen (3) zusammen mit dem daran befestigten Dichtkörper (2) einen Bereich (4) umgeben, durch den der Kupplungsschaft (12) der Mittelpufferkupplung (11) führbar ist, und wobei der Dichtkörper (2) derart ansteuerbar ist, dass die Größe der von dem Dichtkörper (2) abgedeckten Fläche einstellbar ist,
**dadurch gekennzeichnet,**
**dass** der Dichtkörper (2) mindestens eine aufblähbare Hohlkammer aufweist, welche derart ausgebildet und pneumatisch oder hydraulisch ansteuerbar ist, dass beim Aufblähen der mindestens einen Hohlkammer die von dem Dichtkörper (2) abgedeckte Fläche vergrößert wird; oder
**dass** der Dichtkörper (2) rosettenartig aufgebaut ist und eine Vielzahl von jeweils auf einer Achse gelagerte Lamellen aufweist, die über eine Mechanik gemeinsam in Richtung des von dem Rahmen (3) umgebenen Bereiches (4) drehbar sind zum Vergrößern der von dem Dichtkörper (2) abgedeckten Fläche.

2. Vorrichtung (1) nach Anspruch 1,
wobei der Dichtkörper (2) ein aufblasbarer und vorzugsweise wulstartig ausgeführter Balg ist, welcher ausgebildet ist, beim Aufblasen in Radialrichtung zu expandieren.

3. Vorrichtung (1) nach Anspruch 1 oder 2,
wobei der Rahmen (3) ausgebildet ist, vorzugsweise lösbar an der Mittelpufferkupplung (11) des Wagenkastens und insbesondere an dem Kupplungsschaft (12) der Mittelpufferkupplung (11) befestigt zu werden, und wobei der Dichtkörper (2) derart expandierbar ausgebildet ist, dass im expandierten Zustand des Dichtkörpers (2) dieser vorzugsweise radial auf einen Randbereich (13) der im Stirnbereich des Fahrzeuges vorgesehenen Öffnung (9) drückt.

4. Bugnasenmodul (10) für ein spurgeführtes Fahrzeug, insbesondere Schienenfahrzeug, mit einer Rahmenanordnung (14) zum Befestigen des Bugnasenmoduls (10) an der Stirnseite des Fahrzeuges, wobei das Bugnasenmodul (10) eine fahrzeugstirnseitige Öffnung (9) aufweist, durch welche sich im gekuppelten oder kuppelbereiten Zustand des Fahrzeuges der Kupplungsschaft (12) einer an der Stirnseite des Fahrzeuges befestigten Mittelpufferkupplung (11) erstreckt, und wobei das Bugnasenmodul (10) ferner eine Vorrichtung (1) nach einem der Ansprüche 1 bis 3 aufweist zum bedarfsweisen Abdichten der im Bugnasenmodul (10) vorgesehenen fahrzeugseitigen Öffnung (9).

5. Bugnasenmodul (10) nach Anspruch 4, welches ferner eine Klappenanordnung mit mindestens einer Bugklappe und einer Bugklappen-Kinematik aufweist, wobei die mindestens eine Bugklappe mit Hilfe der Bugklappen-Kinematik von einem geöffneten Zustand, in welchem die in dem Bugnasenmodul (10) vorgesehene fahrzeugseitige Öffnung (9) freiliegt, in einen geschlossenen Zustand, in welchem die fahrzeugstirnseitige Öffnung (9) geschlossen ist, überführbar ist.

6. Bugnasenmodul (10) nach Anspruch 5,
wobei die Bugklappen-Kinematik zumindest teilweise innerhalb eines von dem Bugnasenmodul (10) zumindest teilweise umschlossenen Kupplungsraum (15) angeordnet ist.

7. Spurgeführtes Fahrzeug, insbesondere Schienenfahrzeug, mit einem an einer Fahrzeugstirnseite angeordneten Bugnasenmodul (10) nach einem der Ansprüche 4 bis 6 und mit einer an der einen Fahrzeugstirnseite befestigten Mittelpufferkupplung (11).

8. Spurgeführtes Fahrzeug nach Anspruch 7,
wobei der Kupplungsschaft (12) der Mittelpufferkupplung (11) durch den von dem Rahmen (3) und dem daran befestigten Dichtkörper (2) umgebenen Bereich (4) geführt ist, wobei der Rahmen (3) vorzugsweise lösbar an dem Kupplungsschaft (12) der Mittelpufferkupplung (11) befestigt ist, und wobei der Dichtkörper (2) derart expandierbar ausgebildet ist, dass im expandierten Zustand des Dichtkörpers (2) dieser vorzugsweise radial auf einen Randbereich (13) der im Stirnbereich des Fahrzeuges vorgesehenen Öffnung (9) drückt.

9. Spurgeführtes Fahrzeug nach Anspruch 7 oder 8,
wobei die Mittelpufferkupplung (11) von einem ersten Zustand, in weichem die Mittelpufferkupplung (11) innerhalb eines von dem Bugnasenmodul (10) zumindest teilweise umschlossenen Kupplungsraum (15) aufgenommen ist, in einen zweiten Zustand, in welchem sich die Mittelpufferkupplung (11) zumindest teilweise durch die im Stirnbereich des Fahrzeuges vorgesehene Öffnung (9) erstreckt, überführbar ist.

10. Spurgeführtes Fahrzeug nach Anspruch 9,
wobei die Mittelpufferkupplung (11) ein- und ausfahrbar oder ein- und ausklappbar ausgebildet ist zum Überführen der Mittelpufferkupplung (11) von ihrem ersten Zustand in ihren zweiten Zustand und umgekehrt.

## Claims

1. A device (1) for sealing an opening (9) provided in the frontal area of a rail-bound vehicle as needed through which the coupling shaft (12) of a central buffer coupling (11) connected to the vehicle extends when the vehicle is in the coupled or coupling-ready state, wherein the device (1) comprises the following:
- a sealing member (2) of variable size; and
- a frame (3) for supporting the sealing member (2),
wherein the frame (3) together with the sealing member (2) affixed thereto enclose an area (4) through which the coupling shaft (12) of the central buffer coupling (11) can be guided, and wherein the sealing member (2) is controllable such that the size of the area covered by the sealing member (2) can be varied,
**characterized in that**
the sealing member (2) comprises at least one inflatable hollow chamber which is configured and pneumatically or hydraulically controllable such that the area covered by the sealing member (2) enlarges upon the at least one hollow chamber being inflated; or the sealing member (2) is of rosette-like configuration and comprises a plurality of fins respectively mounted on an axis which can be rotated together in the direction of the area (4) surrounded by the frame (3) by means of a mechanism so as to enlarge the area covered by the sealing member (2).

2. The device (1) according to claim 1,
wherein the sealing member (2) is configured as an inflatable and preferably bead-like bellows which is designed to expand radially when inflated.

3. The device (1) according to claim 1 or 2,
wherein the frame (3) is configured to be preferably detachably affixed to the central buffer coupling (11) of the car body and particularly to the coupling shaft (12) of the central buffer coupling (11), and wherein the sealing member (2) is expandably configured so as to preferably press radially against an edge region (13) of the opening (9) provided in the frontal area of the vehicle when said sealing member (2) is in its expanded state.

4. A nose cone module (10) for a rail-bound vehicle, particularly a railway vehicle, comprising a frame assembly (14) for affixing the nose cone module (10) to the front end of the vehicle, wherein the nose cone module (10) comprises a vehicle front-end opening (9) through which the coupling shaft (12) of a central buffer coupling (11) affixed to the front end of the vehicle extends in the coupled or coupling-ready state of the vehicle, and wherein the nose cone module (10) further comprises a device (1) in accordance with any one of claims 1 to 3 for sealing the vehicle-side opening (9) provided in the nose cone module (10) as needed.

5. The nose cone module (1) according to claim 4, further comprising a hatch assembly having at least one front hatch and one front hatch kinematics, wherein the at least one front hatch can be conveyed by means of the front hatch kinematics from an opened state, in which the vehicle-side opening (9) provided in the nose cone module (10) is exposed, into a closed state in which the vehicle-side opening (9) is closed.

6. The nose cone module (1) according to claim 5,
wherein the front hatch kinematics are at least partly accommodated within a coupling compartment (15) at least partially enclosed by the nose cone module (10).

7. A rail-bound vehicle, particularly a railway vehicle, comprising a nose cone module (10) disposed on a front end of a vehicle in accordance with any one of claims 4 to 6 and a central buffer coupling (11) affixed to said vehicle front end.

8. The rail-bound vehicle (1) according claim 7,
wherein the coupling shaft (12) of the central buffer coupling (11) is guided through the area (4) surrounded by the frame (3) and the sealing member (2) affixed thereto, wherein the frame (3) is preferably detachably affixed to the coupling shaft (12) of the central buffer coupling (11), and wherein the sealing member (2) is expandably configured so as to preferably press radially against an edge region (13) of the opening (9) provided in the frontal area of the vehicle when said sealing member (2) is in its expanded state.

9. The rail-bound vehicle (1) according to claim 7 or 8,
wherein the central buffer coupling (11) can be conveyed from a first state, in which said central buffer coupling (11) is accommodated within a coupling compartment (15) at least partially enclosed by the nose cone module (10), into a second state in which said central buffer coupling (11) extends at least partly through the opening (9) provided in the frontal area of the vehicle.

10. The rail-bound vehicle (1) according to claim 9,
wherein the central buffer coupling (11) is configured to be extendable and retractable or to be inwardly and outwardly foldable for conveying the central buffer coupling (11) from its first state into its second state and vice versa.

## Revendications

1. Dispositif (1) pour étancher en cas de besoin une ouverture (9) ménagée dans la région frontale d'un véhicule guidé sur voie, ouverture à travers laquelle s'étend, dans la situation attelée ou prête à être attelée du véhicule, la tige d'attelage (12) d'un attelage à tampon central (11) relié au véhicule, ledit dispositif comprenant les éléments suivants :
- un corps d'étanchéité (2) de taille variable ; et
- un cadre (3) pour porter le corps d'étanchéité (2),
dans lequel le cadre (3) entoure, conjointement avec le corps d'étanchéité (2) fixé sur lui-même, une région à travers laquelle peut être guidée la tige d'attelage (12) de l'attelage à tampon central (11), et dans lequel le corps d'étanchéité (2) est susceptible d'être piloté de telle façon que la taille de la surface recouverte par le corps d'étanchéité (2) est réglable,
**caractérisé en ce que**
le corps d'étanchéité (2) comprend au moins une chambre creuse gonflable, laquelle est réalisée de telle façon et peut être pilotée par voie pneumatique ou hydraulique de telle manière que lors du gonflage de ladite au moins une chambre creuse la surface recouverte par le corps d'étanchéité (2) est agrandie ; ou
**en ce que** le corps d'étanchéité (2) est réalisé à la manière d'une rosace et comporte une pluralité de lamelles montées respectivement sur un axe, qui peuvent être tournées via un mécanisme conjointement en direction de la région (4) entourée par le cadre (3) pour agrandir la surface couverte par le corps d'étanchéité (2).

2. Dispositif selon la revendication 1,
dans lequel le corps d'étanchéité (2) est un soufflet gonflable et de préférence réalisé à la manière d'un bourrelet, qui est réalisé de façon à s'étendre en direction radiale lors du gonflage.

3. Dispositif (1) selon la revendication 1 ou 2,
dans lequel le cadre (3) est réalisé pour être fixé, de préférence de façon détachable, sur l'attelage à tampon central (11) de la caisse de wagon et en particulier sur la tige d'attelage (12) de l'attelage à tampon central (11), et le corps d'étanchéité (2) est réalisé de manière à pouvoir être mis en expansion de telle façon que dans la situation en expansion du corps d'étanchéité (2) celui-ci pousse de préférence radialement sur une région de bordure (13) de l'ouverture (9) prévue dans la région frontale du véhicule.

4. Module d'étrave (10) pour un véhicule guidé sur voie, en particulier un véhicule ferroviaire, comprenant un agencement formant cadre (14) pour fixer le module d'étrave (10) sur le côté frontal du véhicule, ledit module d'étrave (10) comportant une ouverture (9) sur le côté frontal de véhicule, à travers laquelle s'étend, dans l'état attelé ou dans l'état prêt à être attelé du véhicule, la tige d'attelage (12) d'un attelage à tampon central (11) fixé sur le côté frontal du véhicule, et le module d'étrave (10) comprend en outre un dispositif (1) selon l'une des revendications 1 à 3 pour étancher en cas de besoin l'ouverture (9) prévue dans le module d'étrave (10) du côté véhicule.

5. Module d'étrave (10) selon la revendication 4, qui comprend en outre un agencement à volet avec au moins un volet d'étrave et un mécanisme cinématique de volet d'étrave, dans lequel ledit au moins un volet d'étrave peut être transféré, avec l'aide du mécanisme cinématique de volet d'étrave, depuis un état ouvert dans lequel l'ouverture (9) ménagée dans le module d'étrave (10) est dégagée, vers un état fermé dans lequel l'ouverture (9) du côté frontal du véhicule est fermée.

6. Module d'étrave (10) selon la revendication 5,
dans lequel le mécanisme cinématique de volet d'étrave est agencé au moins partiellement à l'intérieur d'un volume d'attelage (15) au moins partiellement enfermé par le module d'étrave (10).

7. Véhicule guidé sur voie, en particulier véhicule ferroviaire, comprenant un module d'étrave (10), agencé sur un côté frontal du véhicule, selon l'une des revendications 4 à 6, et comprenant un attelage à tampon central (11) fixé sur ledit côté frontal du véhicule.

8. Véhicule guidé sur voie selon la revendication 7,
dans lequel la tige d'attelage (12) de l'attelage à tampon central (11) est guidée à travers la région (4) entourée par le cadre (3) et par le corps d'étanchéité (2) fixé sur celui-ci, et le cadre (3) est fixé, de préférence de façon détachable, sur la tige d'attelage (12) de l'attelage à tampon central (11), et le corps d'étanchéité (2) est réalisé de manière à pouvoir être mis en expansion de telle façon que, dans la situation en expansion du corps d'étanchéité (2), celui-ci pousse, de préférence radialement, sur une région de bordure (13) de l'ouverture (9) ménagée dans la région frontale du véhicule.

9. Véhicule guidé sur voie selon la revendication 7 ou 8,
dans lequel l'attelage à tampon central (11) est susceptible d'être transféré depuis un premier état dans lequel l'attelage à tampon central (11) est reçu à l'intérieur d'un espace d'attelage (15) au moins partiellement enfermé par le module d'étrave (10), vers un second état dans lequel l'attelage à tampon central (11) s'étend au moins partiellement à travers l'ouverture (9) ménagée dans la région frontale du véhicule.

10. Véhicule guidé sur voie selon la revendication 9,
dans lequel l'attelage à tampon central (11) est susceptible d'être déployé et rétracté, ou d'être pivoté à l'ouverture et à la fermeture pour transférer l'attelage à tampon central (11) de son premier état vers son second état et inversement.
